# EUROPEAN PATENT SPECIFICATION

(11) **EP 4 339 092 B1**
(45) Date of publication and mention of the grant of the patent: **24.12.2025**
(21) Application number: 21942064.3
(22) Date of filing: 10.11.2021
(51) Int. Cl.: B02C 18/08, B02C 18/18, B63B 13/00, B63J 4/00, C02F 1/34, C02F 103/00, C02F 1/76

(54) **BLADE-DRIVEN MICRO-PULVERIZATION UNIT**
KLINGENGETRIEBENE MIKROPULVERISIERUNGSEINHEIT
UNITÉ DE MICRO-PULVÉRISATION ENTRAÎNÉE PAR UNE PALE

(30) Priority: 14.05.2021 KR 20210062840
(43) Date of publication of application: 20.03.2024
(73) Proprietor: Seo, Min Su, Seoul 06373 (KR)
(72) Inventor: Seo, Min Su, Seoul 06373 (KR)
(74) Representative: Viering, Jentschura & Partner mbB Patent- und Rechtsanwälte
(86) International application number: PCT/KR2021/016355
(87) International publication number: WO 2022/239917

(56) References cited:
- KR-A- 20150 065 462
- KR-A- 20150 112 310
- KR-A- 20150 122 840
- KR-A- 20180 097 063
- KR-B1- 101 851 168
- US-A1- 2016 130 165

## Description

### Technical Field

The present invention relates to a micro pulverization unit(micro slash unit), and more specifically, to a blade-driven micro pulverization unit that is capable of pulverizing microorganisms contained in ballast water, while being disposed in a ballast water treatment device for purifying the ballast water to be filled in ballast tanks of a ship, thereby satisfying the environmental regulations for the ballast water discharge from the ship.

### Background Art

KR 2015 01 12310 A describes an apparatus for treating ballast water from a ballast tank.

Generally, a plurality of ballast tanks are disposed in a ship to fill sea water supplied from sea chests therein.

The ballast tanks are located on the bottom or left and right sides of a body of the ship and thus adjusted in the amounts of ballast water (sea water) filled therein so that they serve to lower the center of gravity of the ship and control the left and right balance of the ship in consideration of the weights of objects loaded in the ship, thereby enabling the ship to stably sail.

When the ship enters a port of another country, however, the ballast water (sea water) filled in the ballast tanks has to be discharged to the outside from the ship, and in this case, harmful microorganisms, planktons, germs, bacteria, etc. contained in the ballast water are discharged together with the ballast water, thereby disturbing the native ecosystem around the sea area to cause ocean pollution.

To prevent the ocean pollution caused by the ballast water discharge, accordingly, environmental regulations for the ballast water discharge are suggested in many countries in the world, and International Maritime Organization (IMO) requires the installation for a ballast water treatment device for removing harmful marine organisms from ballast water before the ballast water is discharged on ports and open sea.

Accordingly, a ballast water treatment system (BWTS) for purifying the ballast water is mounted on the ship to satisfy the regulations for ballast water discharge.

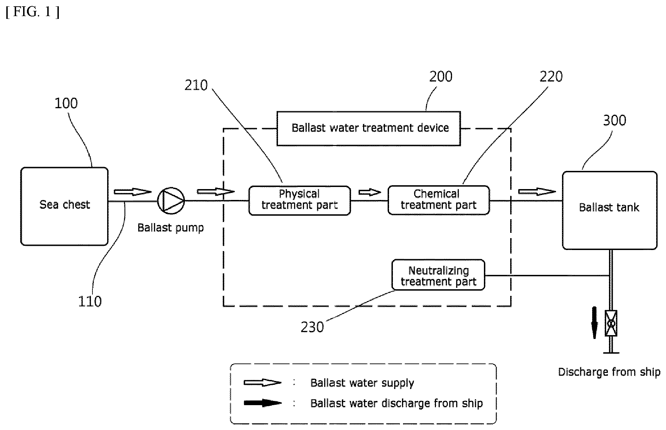

Hereinafter, a conventional ballast water treatment system will be explained with reference to FIG 1.

FIG. 1 is a schematic diagram showing a general ballast water treatment system.

As shown, the general ballast water treatment system is adapted to purify the sea water supplied from a sea chest 100 to a ballast tank 300 and includes a ballast water treatment device 200.

Accordingly, the sea water introduced from the sea chest 100 through a ballast pump is purified through the ballast water treatment device 200 and then filled in the ballast tank 300.

In this case, the ballast water treatment device 200 includes a physical treatment part 210 for removing harmful microorganisms or planktons contained in the sea water, a chemical treatment part 220 for disinfecting the harmful microorganisms or planktons, and a neutralizing treatment part 230 for neutralizing the ballast water upon the discharge of the ballast water to the outside from the ship.

The physical treatment part 210 serves to physically filter the microorganisms, and the chemical treatment part 220 to disinfect the harmful microorganisms or planktons using a disinfectant such as hypochlorite (NaClO) having disinfecting effectiveness.

In addition thereto, the ballast water treatment device 200 disinfects the harmful microorganisms contained in the ballast water using equipment with a large amount of power consumed, such as an electrolysis device, an ultraviolet ray (UV) disinfection device, or an ozone disinfection device, and the like.

In this case, the conventional physical treatment part 210 filters the ballast water using a filtering member.

The conventional filtering member used in the physical treatment part 210 is formed of a filter element having a structure of a mesh or disc with a plurality of fine pores or gaps, and the pores or gaps have the sizes of about 50 to 100 µm.

Accordingly, the filtering member filters and removes the microorganisms or planktons contained in the sea water, thereby primarily purifying the sea water.

However, the conventional filtering member has the following problems.

Firstly, the pores or gaps of the conventional filtering member have to be limited to the sizes of tens of micrometers so as to filter the microorganisms, so that clogging may occur periodically, thereby causing the operation of the system to be stopped and increasing the maintenance cost thereof.

Secondly, the amount of ballast water filled in the ballast tanks is about 500 to 3,000 tons, and accordingly, the ballast water treatment device has to ensure about hundreds of tons to thousands of tons of sea water per hour according to ship sizes, so that to satisfy the conditions, the filtering member has to become greatly large, thereby having difficulties in ensuring installation space and workability, requiring the movement of the ship to a dry dock to perform a repair work such as installation or replacement, while stopping the sailing of the ship, and causing huge loss owing to the stop of the sailing.

Thirdly, the pores or gaps of the filtering member have to have the sizes greater than about 50 µm so as to ensure the flow rate of sea water, so that the ultra microorganisms or planktons with the sizes less than 50 µm may not be filtered at all through the filtering member.

Lastly, the conventional filtering member does not filter the ultra microorganisms with the sizes less than 50 µm, and so as to kill the ultra microorganisms, accordingly, high-concentration hypochlorite has to be used in the chemical treatment part, so that a neutralizing device for neutralizing hypochlorous acids remaining in the ballast water has to be necessarily required.

### Disclosure of the Invention

### Technical Problems

Accordingly, it is an object of the present invention to provide a blade-driven micro pulverization unit that is capable of providing a rotatable multi-stacked blade part having relatively large gaps, which replaces a conventional filtering member, thereby prevent clogging from occurring in the supply of sea water.

It is another object of the present invention to provide a blade-driven micro pulverization unit that is capable of allowing a conventional physical treatment part to become compact so that an installation space can be minimized and a repair work such as installation or replacement of the ballast water treatment device can be done on a ship itself, without moving to a dry dock.

It is yet another object of the present invention to provide a blade-driven micro pulverization unit that is capable of effectively killing ultra microorganisms to allow a minimal chemical treatment in a chemical treatment part to be performed, thereby needing no neutralizing device for removing the residual oxidants from the ballast water when the ballast water is discharged from a ship.

### Technical Solutions

To accomplish the above-mentioned objects, the present invention provides a blade-driven micro pulverization unit according to claim 1. As described in the present invention, the blade-driven micro pulverization unit includes in particular:
a pipe connecting body adapted to provide a given flow path along which a fluid is introduced and discharged; a blade rotating body rotatably disposed on the flow path formed in the pipe connecting body;
and a driver for rotating the blade rotating body, wherein the blade rotating body may include a multi-stacked
blade part having a plurality of gaps for passing the fluid therethrough to consistently apply mechanical rotating shocks to the fluid by high-speed rotation so that the fluid flowing thereinto is discharged to the outside through the plurality of gaps.

The blade rotating body includes:
an upper plate fitted to a driving shaft of the driver; a lower plate facingly spaced apart from the upper plate in the direction of a rotating center axis and having an inlet hole formed on the central portion thereof to introduce the fluid thereinto; and the multi-stacked blade part mounted between the upper plate and the lower plate.

The multi-stacked blade part includes:
a plurality of first multi-stacked blade parts mounted along the peripheries of the inner surfaces of the upper plate and the lower plate to stackedly form the plurality of gaps; and a plurality of second multi-stacked blade parts each having the front end coupled to the corresponding first multi-stacked blade part and the rear end extending radially and thus adjacent to the rotating center axis to stackedly form the plurality of gaps.

Further, each second multi-stacked blade part may have the shape of an arch slant in a rotating direction of the blade rotating body, and the rear ends of the second multi-stacked blade parts may be located on an imaginary circle around the rotating center axis.

In this case, desirably, the diameter of the imaginary circle may be smaller than the diameter of the inlet hole of the lower plate.

Further, the front ends of the second multi-stacked blade parts may be insertedly coupled to the gaps formed by the first multi-stacked blade parts, so that the gaps formed by the first multi-stacked blade parts and the gaps formed by the second multi-stacked blade parts may be located to cross one another.

### Advantageous Effectiveness

As described above, the micro pulverization unit according to the present invention has the following advantages.

Firstly, the multi-stacked blade part having relatively large gaps can be adopted to prevent clogging from occurring in the supply of sea water, thereby efficiently operating the ballast water treatment device and remarkably reducing the maintenance cost thereof.

Secondly, the physical treatment part can be compact in size so that the devices related thereto can be efficiently located to improve space usability, thereby enabling application to various ship structures.

Thirdly, the repair work such as installation or replacement of the ballast water treatment device can be done on the ship itself, thereby remarkably reducing a cost caused by the stop of ship sailing.

Lastly, a minimal chemical treatment in the chemical treatment part can be performed, thereby satisfying the environmental regulations for ballast water discharge, without having any additional equipment like a neutralizing device for removing the residual oxidants from the ballast water.

### Brief Description of Drawings

FIG. 1 is a schematic diagram showing a general ballast water treatment system.
FIG 2 is a sectional view showing a micro pulverization unit according to the present invention.
FIG 3 is a perspective view showing a blade rotating body of the micro pulverization unit according to the present invention.
FIG 4 is a bottom side view showing the blade rotating body of FIG 3.
FIG 5 is a top view showing a multi-stacked blade part of the blade rotating body of FIG 3.
FIG 6 is a perspective view showing a second multi-stacked blade part of the blade rotating body of FIG. 3.

### Best Mode for Invention

Hereinafter, an explanation of a blade-driven micro pulverization unit according to the present invention will be given in detail with reference to the attached drawings.

As shown in FIG 1, first, a ballast water treatment system includes the ballast water treatment device 200 for purifying and treating sea water, and the ballast water treatment device 200 includes the physical treatment part 210, the chemical treatment part 220, and the neutralizing treatment part 230.

The conventional physical treatment part 210 of the ballast water treatment device 200 has to consistently filter a large amount of sea water using a filtering member, thereby causing periodical clogging on the filtering member, so that the ballast water treatment system does not work, and a maintenance cost thereof increases.

Accordingly, a micro pulverization unit according to the present invention can replace the filtering member used in the physical treatment part 210 of the conventional ballast water treatment device 200, thereby effectively pulverizing and killing ultra microorganisms contained in the sea water and preventing clogging from occurring in the supply of sea water.

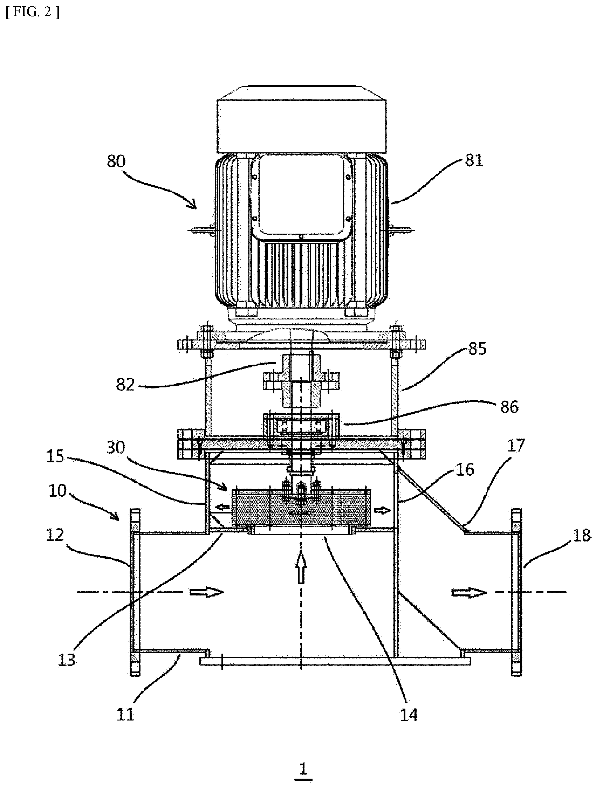

Now, an explanation of the blade-driven micro pulverization unit according to the present invention will be given in detail with reference to FIGs. 2 to 6.

First, the whole configuration of the blade-driven micro pulverization unit according to the present invention will be explained with reference to FIG 2.

In this case, FIG 2 shows the whole configuration of the micro pulverization unit 1 according to the present invention.

As shown in FIG 2, the micro pulverization unit 1 includes a pipe connecting body 10, a blade rotating body 30, and a driver 80.

The pipe connecting body 10 is connected to a sea water supply pipe 110 (See FIG 1) for supplying sea water to the ballast tank 300 from the sea chest 100 and has a structure of a pipe for providing a flow path through which the sea water passes.

The pipe connecting body 10 has an inlet pipe 11 and an outlet pipe 17, and the inlet pipe 11 and the outlet pipe 17 are connected to the sea water supply pipe 110.

The inlet pipe 11 has an inlet 12 into which a fluid (sea water) is introduced, and the outlet pipe 17 has an outlet 18 from which the introduced fluid is discharged.

In this case, the inlet 12 and the outlet 18 have flanges so that the pipe connecting body 10 can be connected to the sea water supply pipe 110, and as shown, they are formed on the positions facing each other on the same line as each other in a horizontal direction.

However, the positions of the inlet 12 and the outlet 18 may not be limited thereto, and accordingly, they may be formed on various positions and directions according to the positions or shapes of the sea water supply pipe 110.

Further, the inlet pipe 11 has a given length in a horizontal direction, and a pipeshaped pulverizer 15 with a given length is located on top of a front side (outlet side) of the inlet pipe 11.

In this case, the front side in the horizontal direction of the inlet pipe 11 facing the inlet 12 is blocked, and a partition wall 13 is disposed on top of the inlet pipe 11 to which the pulverizer 15 is connected.

The partition wall 13 has a communicating hole 14 formed thereon to pass the fluid therethrough, so that the internal area of the inlet pipe 11 and the internal area of the pulverizer 15 communicate with each other by means of the communicating hole 14.

Accordingly, as shown, the inlet pipe 11 has an inverse 'L'-shaped structure bent at a right angle.

Further, the pulverizer 15 is a part in which the blade rotating body 30 as will be discussed later is insertedly located and has a cylindrical structure whose interior is empty. The underside of the pulverizer 15 is coupled to the partition wall 13 of the inlet pipe 11, and the top of the pulverizer 15 is coupled to the underside of a shaft housing 85 of the driver 80 by means of flanges.

Further, the pulverizer 15 has an outlet hole 16 formed on one side wall (outlet side) thereof and thus communicating with the outlet pipe 17, so that the internal area of the pulverizer 15 communicates with the internal area of the outlet pipe 17.

In this case, the outlet hole 16 of the pulverizer 15 is formed above the outlet 18 of the outlet pipe 17, and accordingly, the outlet pipe 17 extends slantly downward from the outlet hole 16 and is then bent in a horizontal direction to thus form the outlet 18.

Accordingly, the inlet pipe 11, the pulverizer 15, and the outlet pipe 17 have the internal areas communicating with one another sequentially by means of the communicating hole 14 and the outlet hole 16.

Meanwhile, the fluid (sea water), which is supplied from the sea chest 100 by means of the ballast pump (See FIG 1), moves to the physical treatment part 210, as shown by an arrow of FIG 1, and in this case, the fluid enters the micro pulverization unit 1 according to the present invention replacing the conventional physical treatment part 210.

Accordingly, the fluid (sea water) is introduced into the inlet pipe 11 of the pipe connecting body 10 through the inlet 12, and the fluid entering the inlet pipe 11 moves to the interior of the pulverizer 15 through the communicating hole 14.

The fluid entering the interior of the pulverizer 15 passes through the blade rotating body 30, the outlet hole 16, the outlet pipe 17, and the outlet 18, sequentially, as shown by arrows of FIG. 2, and then enters the sea water supply pipe 110 again.

In this case, as explained with reference to FIG 1, the discharged fluid moves to the chemical treatment part 220.

Accordingly, the fluid enters the inlet 12, moves in the horizontal direction, moves upward by the collision against the front side wall surface of the inlet pipe 11, and enters the interior of the pulverizer 15. Next, the fluid moves slantly downward and is discharged in the horizontal direction through the outlet 18 of the outlet pipe 17.

Further, the inlet pipe 11 has a guide member with various shapes disposed in the internal area thereof to gently form the flow path of the fluid so that the fluid can move easily, and in the same manner as above, the pulverizer 15 and the outlet pipe 17 have guide members with various shapes disposed in the internal areas thereof to gently guide the flow of the fluid.

Meanwhile, the inlet pipe 11, the pulverizer 15, and the outlet pipe 17 are disposed separately from one another, for the conveniences of description, but they may be formed integrally with one another. Otherwise, they may be detachably coupled to one another.

Hereinafter, an explanation of the driver 80 according to the present invention will be given.

As shown in FIG 2, the driver 80 includes a driving motor 81, a driving shaft 82, and the shaft housing 85.

The driving motor 81 applies a rotary force for rotating the blade rotating body 30 and is connected to the blade rotating body 30 by means of the driving shaft 82 to thus rotate the entire blade rotating body 30.

In this case, the driving motor 81 is coupled to the shaft housing 85 connected to the pulverizer 15 of the pipe connecting body 10.

The shaft housing 85 has a cylindrical structure whose interior is empty to coupledly pass the driving shaft 82 therethrough, and the underside of the shaft housing 85 is coupled to the top of the pulverizer 15.

In this case, the driving shaft 82 rotatably passes through the underside of the shaft housing 85 and the top of the pulverizer 15 and is thus coupled to the blade rotating body 30.

Accordingly, the underside of the shaft housing 85 and the top of the pulverizer 15, through which the driving shaft 82 passes, have sealed structures so that the leakage of the fluid is prevented.

Further, a bearing 86 is disposed on the underside of the shaft housing 85 to gently rotate the driving shaft 82, and the underside of the shaft housing 85 and the top of the pulverizer 15, through which the driving shaft 82 passes, are sealed in common methods to prevent the leakage of the fluid from occurring.

In this case, the driving shaft 82 may extend by means of shaft connection and be thus coupled to the blade rotating body 30 if necessary in consideration of the scale or size of the unit.

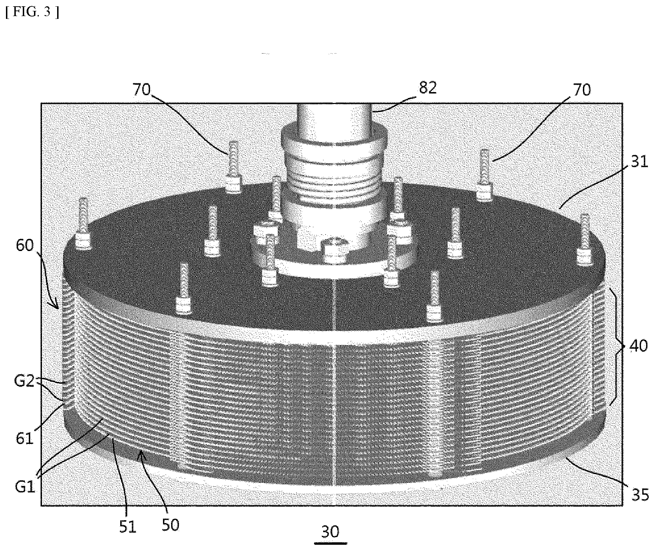

Now, an explanation of the blade rotating body 30 will be given in detail with reference to FIGs. 3 to 6.

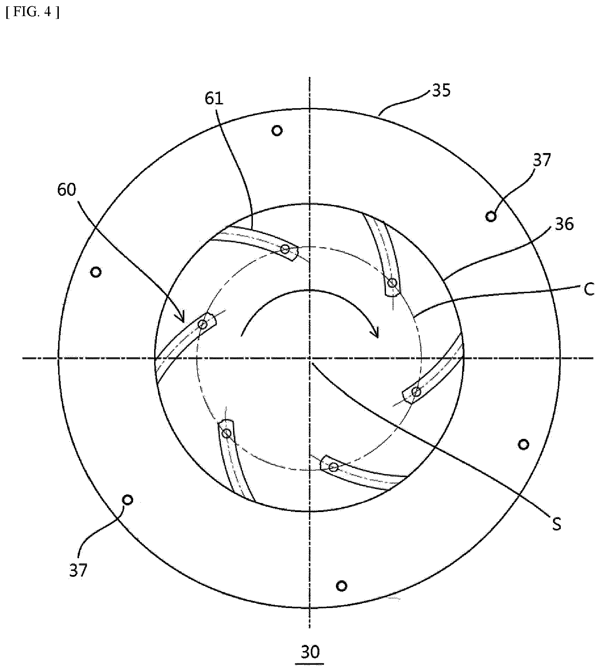

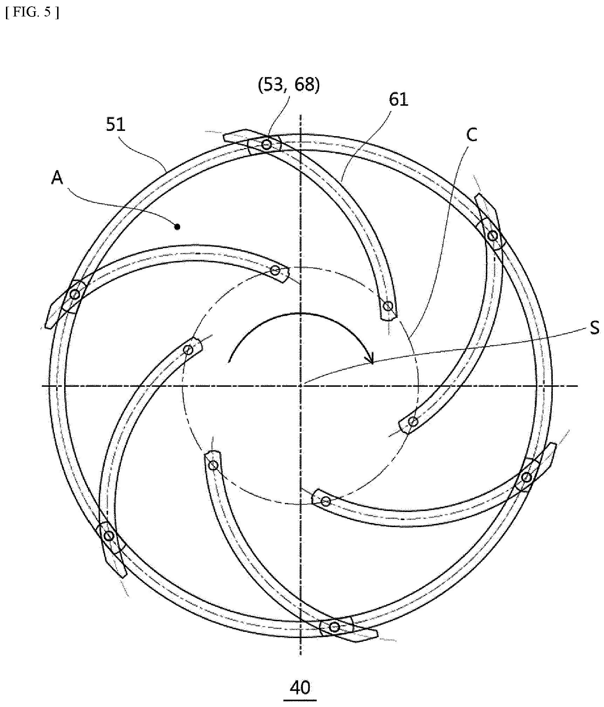

In this case, FIG 3 is a perspective view showing the blade rotating body 30 of the micro pulverization unit 1 according to the present invention, FIG 4 is a bottom side view showing the blade rotating body 30 of FIG 3, and FIG 5 is a top view showing a multi-stacked blade part 40 of the blade rotating body 30 of FIG 3.

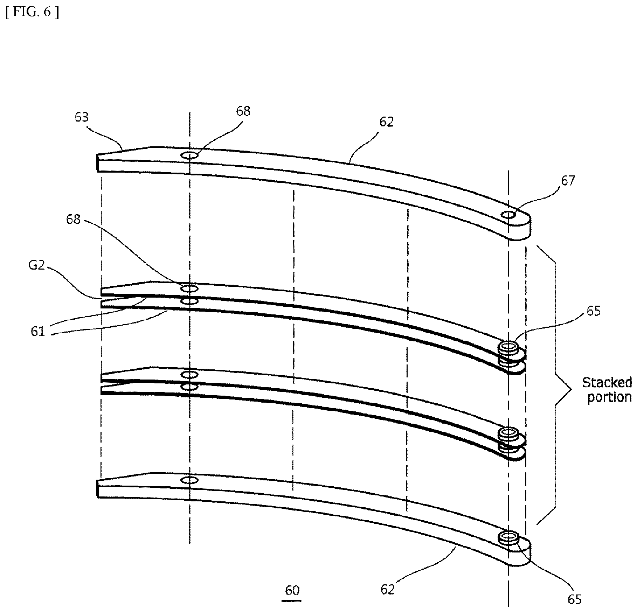

Further, FIG 6 is a perspective view showing a second multi-stacked blade part 60 of the blade rotating body 30 of FIG 3.

In this case, FIG. 5 shows a configuration with blades 51 of a first multi-stacked blade part 50 and blades 61 of six second multi-stacked blade parts 60 forming one layer of the multi-stacked blade part 40 of the blade rotating body 30, for the conveniences of description.

As shown in FIG 2, the blade rotating body 30 is connected to the communicating hole 14 of the inlet pipe 11 and thus located on the flow path of the fluid. As the blade rotating body 30 rotates at a high speed, the fluid introduced thereinto passes through a plurality of gaps G1 and G2 and is thus discharged to the outside (in a radial direction), thereby pulverizing and killing the microorganisms contained in the fluid.

As shown in FIG 3, the blade rotating body 30 has the multi-stacked blade part 40 in which the plurality of gaps G1 and G2 are repeatedly formed, and the multi-stacked blade part 40 is cylindrical so that the fluid enters the center thereof.

Accordingly, the fluid is introduced into the interior of the blade rotating body 30 in a direction of a rotating center axis (a driving axis) S (See FIG 4) of the blade rotating body 30 through the communicating hole 14 of the pipe connecting body 10, passes through a rotating area A (See FIG 5) of the multi-stacked blade part 40 by means of the rotation of the blade rotating body 30 through the driver 80, passes through the plurality of gaps G1 and G2 formed in the multi-stacked blade part 40, and is discharged in the radial direction.

As shown in FIG 3, the blade rotating body 30 includes an upper plate 31, a lower plate 35, and the multi-stacked blade part 40.

In this case, the upper plate 31 and the lower plate 35 have the shapes of circular plates each having a given area and thickness and are facingly spaced apart from each other in the direction of the rotating center axis S.

In this case, as shown in FIG 3, the driving shaft 82 is coupled to the central portion of the upper plate 31.

Further, as shown in FIG 4, the lower plate 35 has the same circular plate as the upper plate 31 and has an inlet hole 36 penetrating the central portion thereof to introduce the fluid thereinto.

The inlet hole 36 is formed correspondingly to the communicating hole 14 of the inlet pipe 11.

The blade rotating body 30 is coupled to the driving shaft 82 and thus rotates at a high speed, and accordingly, the lower plate 35 is disposed spaced apart from top of the partition wall 13 formed on the inlet pipe 11. In this case, desirably, a cylindrical guide member is disposed along the inner peripheral surface of the communicating hole 14 to allow the fluid to effectively enter the interior of the inlet hole 36.

Further, as shown in FIG 3, the multi-stacked blade part 40 is disposed between the upper plate 31 and the lower plate 35.

The multi-stacked blade part 40 serves to pulverize and kill the microorganisms contained in the fluid by means of high-speed rotations and is disposed between the upper plate 31 and the lower plate 35 to repeatedly form the plurality of gaps G1 and G2 in the direction of the rotating center axis S, so that the fluid introduced into the central portion of the blade rotating body 30 is discharged to the outside (radially) through the plurality of gaps G1 and G2.

The multi-stacked blade part 40 includes the first multi-stacked blade parts 50 and the second multi-stacked blade parts 60, and as shown in FIGs. 4 and 5, they are provided to form the rotating area A (having a circular band with a given width around the rotating center axis S) along the periphery of the blade rotating body 30.

The first multi-stacked blade parts 50 have the plurality of circular band-shaped blades 51 sequentially stacked onto one another to repeatedly form the plurality of gaps G1 in the direction of the rotating center axis S, while being mounted along the peripheries of the inner surfaces (facing surfaces) of the upper plate 31 and the lower plate 35.

As a result, as shown in FIG 3, the gaps G1 are provided to the form of rings around the rotating center axis S along the periphery of the blade rotating body 30 and thus repeatedly stacked in the direction of the rotating center axis S to form the shape of a cylinder.

In this case, desirably, an outer diameter of the entire blade 51 of each first multi-stacked blade part 50 is somewhat smaller than the outer diameters of the upper plate 31 and the lower plate 35 to thus ensure damage prevention and stability.

As shown in FIG 5, each first multi-stacked blade part 50 has through holes 53 formed thereon at given intervals, and fixing bolts 70 are penetratingly coupled to the through holes 53.

The fixing bolts 70 are penetratingly coupled to coupling holes 37 formed radially along the periphery of the lower plate 35 and thus allow the lower plate 35 and the first multi-stacked blade parts 50 to be fixed to the upper plate 31.

Further, as shown in FIG 6, each second multi-stacked blade part 60 includes a pair of holders 62 and a plurality of blades 61 disposed between the pair of holders 62.

The second multi-stacked blade part 60 as shown in FIG 6 is suggested, while some of the blades 61 are being removed, and the blades 61 are provided to form a stacked portion in which the same gaps G2 are repeatedly formed.

In this case, the blades 61 have the shapes of bands stacked sequentially onto one another to form the gaps G2.

Each second multi-stacked blade part 60 is configured to have the front ends of the blades 61 coupledly inserted into the gap G1 of each first multi-stacked blade part 50 and have the rear end of the blades 61 extending to a given length to be thus adjacent to the rotating center axis S of the blade rotating body 30.

In this case, as shown in FIGs. 5 and 6, each second multi-stacked blade part 60 has the shape of an arch with a given length, and the six second multi-stacked blade parts 60 are disposed radially along the blades 51 of each first multi-stacked blade part 50 around the rotating center axis S.

In this case, as shown in FIG 5, each blade 61 has the shape of an arch slant in the rotating direction thereof.

Further, as shown in FIG. 5, the rear ends of the six blades 61 extending toward the direction of the rotating center axis S are located on an imaginary circle C having a given diameter.

In this case, as shown in FIG 4, the diameter of the imaginary circle C is somewhat smaller than the diameter of the inlet hole 36 into which the fluid is introduced, and accordingly, the rear ends of the second multi-stacked blade parts 60 are exposed to the outside when seen on the underside of the blade rotating body 30.

As a result, the fluid introduced from the inlet hole 36 of the lower plate 35 enters the rotating area A of the multi-stacked blade part 40, rotates together with the multi-stacked blade part 40, and is discharged radially.

In this case, as shown in FIG 5, the front ends of the blades 61 are desirably coupled to the blades 51 of the corresponding first multi-stacked blade part 50 to protrude outward from the blades 51, but as shown in FIG 3, they do not protrude outward from the peripheries of the upper plate 31 and the lower plate 35 to thus ensure the damage prevention and stability of the blades 61.

Further, the holders 62 and the blades 61 have through holes 67 and 68 formed on both ends thereof on the same lines as one another in a vertical direction, and they have inclined surfaces 63 formed on the front ends thereof.

In this case, as shown in FIG 3, the fixing bolts 70 are penetratingly coupled to the through holes 67 and 68, and accordingly, the second multi-stacked blade parts 60 are fixed to the upper plate 31 by means of the fixing bolts 70 and nuts.

In specific, the fixing bolts 70 for coupling the lower plate 35 and the first multi-stacked blade parts 50 to the upper plate 31 are coupled to the through holes 68 formed on the front ends of the blades 61, and the fixing bolts 70 for coupling the second multi-stacked blade parts 60 to the upper plate 31 are coupled to the through holes 67 formed on the rear ends of the blades 61.

As a result, the first multi-stacked blade parts 50 and the second multi-stacked blade parts 60 simultaneously rotate together with the upper plate 31 and the lower plate 35 when the driver 80 rotates.

Further, the front ends of the holders 62 and the blades 61 of the second multi-stacked blade parts 60 are coupledly inserted into the gaps G1 of the first multi-stacked blade parts 50, so that the second multi-stacked blade parts 60 provide the gaps G2 corresponding to the thicknesses of the blades 51 of the first multi-stacked blade parts 50.

Accordingly, spacers 65 corresponding to the gaps G1 are fitted to the through holes 67 formed on the rear ends of the second multi-stacked blade parts 60.

The spacers 65 are common washers that can be fit to the fixing bolts 70, but only if given members can keep the gaps G2, they may be freely adopted as the spacers 65.

As a result, the blades 61 of the second multi-stacked blade parts 60 are stacked onto one another, while keeping the gaps G2 corresponding to the thicknesses of the spacers 65.

Further, the front ends of the blades 61 of the second multi-stacked blade parts 60 are alternately stacked with the blades 51 of the first multi-stacked blade parts 50. As a result, the blades 61 of the second multi-stacked blade parts 60 are kept fitted to the gaps G1 of the first multi-stacked blade parts 50, and accordingly, the gaps G1 formed by the first multi-stacked blade parts 50 and the gaps G2 formed by the second multi-stacked blade parts 60 do not have any same height as one another and are thus located to cross one another.

In specific, when viewed in the horizontal direction of the blade rotating body 30, the blades 51 of the first multi-stacked blade parts 50 are located at the same heights as the gaps G2 of the second multi-stacked blade parts 60, and the blades 61 of the second multi-stacked blade parts 60 are located at the same heights as the gaps G1 of the first multi-stacked blade parts 50.

Further, if the blades 51 of the first multi-stacked blade parts 50 have the same thicknesses as the blades 61 of the second multi-stacked blade parts 60, the gaps G1 and G2 have the same thicknesses as one another.

As a result, the fluid passing through the gaps G2 of the second multi-stacked blade parts 60 collides against the blades 51 of the first multi-stacked blade parts 50, while having a centrifugal force applied thereto, so that the microorganisms can be more effectively pulverized and killed.

In this case, the second multi-stacked blade parts 60 have the spacers 65 with the appropriate thicknesses in consideration of the thicknesses of the blades 51 of the first multi-stacked blade parts 50, thereby appropriately adjusting the gaps G1 and G2.

In specific, the spacers 65 are not needed on the portions where the first multi-stacked blade parts 50 and the second multi-stacked blade parts 60 are overlaid onto one another, but if it is desired to adjust the gaps G1 and G2, the spacers 65 may be located on the portions where the first multi-stacked blade parts 50 and the second multi-stacked blade parts 60 are overlaid onto one another.

According to the present invention, the gaps of the first and second multi-stacked blade parts 50 and 60 are desirably kept to about 2 to 5 mm, but they may be appropriately determined in consideration of a flow rate of sea water or usable conditions, without being limited thereto.

If the gaps G1 and G2 are too small, for example, ultra microorganisms may be effectively removed, but an appropriate amount of fluid may not be ensured. Contrarily, if the gaps G1 and G2 are too large, a relatively large amount of fluid may be ensured, but the removal effectiveness of the ultra microorganisms may become low.

Accordingly, the gaps G1 and G2 are appropriately determined in size in consideration of a flow rate of sea water, sizes or properties of the microorganisms to be removed, and the like.

Further, even the pairs of holders 62 of the second multi-stacked blade parts 60 are inserted into the gaps G1 of the first multi-stacked blade parts 50, and accordingly, they have appropriate thicknesses in consideration of the gaps G1 of the first multi-stacked blade parts 50.

Hereinafter, an operating process of the blade-driven micro pulverization unit 1 according to the present invention will be explained in detail.

First, as shown in FIG 1, the sea water enters the physical treatment part 210 of the ballast water treatment device 200 from the sea chest 100 by means of the ballast pump, and in this case, the sea water enters the micro pulverization unit 1 according to the present invention that replaces the conventional filtering member used in the physical treatment part 210.

In this case, since the sea water supply pipe 110 is connected to the inlet pipe 11 of the pipe connecting body 10, the fluid (sea water) enters the inlet pipe 11 through the inlet 12, moves upward, passes through the communicating hole 14 of the partition wall 13 and the inlet hole 36 formed on the lower plate 35 of the blade rotating body 30, and enters the rotating area A of the blade rotating body 30.

Further, since the blade rotating body 30 and the multi-stacked blade part 40 rotate at a high speed by means of the rotation of the driver 80, the fluid entering the rotary area A of the multi-stacked blade part 40 rotates together with the multi-stacked blade part 40.

In this case, the fluid receives the flow pressure of the ballast pump and the centrifugal force generated from the rotation of the multi-stacked blade part 40, passes through the gaps G2 of the second multi-stacked blade parts 60 and the gaps G1 of the first multi-stacked blade parts 50, and is discharged to the outside (in the radial direction) of the blade rotating body 30.

The blade rotating body 30 rotates at a high speed, i.e. at 850 to 1200 rpm, and the rotating speed may be determined appropriately according to the flow rate, the sizes of the gaps G1 and G2 of the blade rotating body 30, and the like.

Further, the blades 51 and 61 of the first multi-stacked blade parts 50 and the second multi-stacked blade parts 60 apply rotating forces, while passing the fluid therethrough, and in the process where the fluid passes through the gaps G1 and G2 and pushes toward the outside, the blades 51 and 61 consistently apply mechanical rotating shocks to the fluid. In this case, the fluid generates complex vortexes in a process of colliding against or cutting by the blades 51 and 61 and is thus discharged in the radial direction of the blade rotating body 30.

As a result, the microorganisms contained in the fluid repeatedly collide against or cut by the blades 51 and 61 of the first multi-stacked blade parts 50 and the second multi-stacked blade parts 60, so that they are pulverized and killed.

Further, as shown in FIG 2, the fluid passing through the blade rotating body 30 moves slantly downward and enters the outlet pipe 17. Next, the fluid enters the chemical treatment part 220 through the sea water supply pipe 110.

Accordingly, the micro pulverization unit 1 according to the present invention has the multi-stacked blade part 40 with relatively large gaps than the conventional filtering member, thereby preventing the periodical occurrence of clogging in the supply of sea water, and further, the micro pulverization unit 1 according to the present invention is compact in size so that upon a repair work such as installation or replacement of the ballast water treatment device, the repair work can be done on the ship itself, without moving to a dry dock, thereby remarkably reducing a cost caused by the stop of sailing.

Also, as the mechanical rotating shocks are applied directly to the fluid, the ultra small microorganisms may be completely killed, thereby perfectly satisfying the environmental regulations for ballast water discharge.

The desirable embodiment of the micro pulverization unit according to the present invention has been explained as mentioned above, but without being limited thereto, various other embodiments may be adopted.

The blades 51 of each first multi-stacked blade part 50 are coupled to one another to have an integral structure in the form of a single ring, but for example, the six blades 51 may be separately coupled to one another to form one circular blade 51, in the same manner as the second multi-stacked blade parts 60.

In this case, if some of the blades 51 of the first multi-stacked blade parts 50 are damaged, only the damaged blades 51 are replaced by new ones, thereby performing easy maintenance thereof.

Further, each second multi-stacked blade part 60 having the six arch-shaped blades 61 disposed radially has been explained, but the number of blades 61 may be appropriately determined according to the flow rate to be treated, the gaps G1 and G2, and the like.

Also, the blades 61 of the second multi-stacked blade parts 60 having the gently inclined arch structures have been explained, but they may have inclined linear or oval structures or structures combined thereof.

### Industrial Applicability

As described above, the blade-driven micro pulverization unit according to the present invention is applicable to the ballast water treatment device 200 for removing harmful microorganisms or planktons contained in the sea water and to various fluid supply lines adapted to pulverize and kill the microorganisms contained in a fluid.

## Claims

1. A blade-driven micro pulverization unit (1) comprising:
a pipe connecting body (10) adapted to provide a given flow path along which a fluid is introduced and discharged, wherein the pipe connecting body (10) comprises an inlet pipe (11) having a communicating hole (14) and an outlet pipe (17) which are suitable for being connected to a sea water supply pipe (110);
a pulverizer (15) having a cylindrical structure whose interior is empty and in which is insertedly located a blade rotating body (30), wherein the pulverizer (15) has an outlet hole (16) formed on one side wall thereof so that the internal area of the pulverizer (15) communicates with the internal area of the outlet pipe (17); and
a driver (80) for rotating the blade rotating body (30), wherein the blade rotating body (30) rotates at a high speed of 850 to 1200 rpm around a vertical rotating center axis (S),
wherein the blade rotating body (30) comprises:
an upper plate (31) fitted to a driving shaft (82) of the driver (80);
a lower plate (35) facingly spaced apart from the upper plate (31) in the direction of said rotating center axis (S) and having an inlet hole (36) formed on the central portion thereof to introduce the fluid thereinto, wherein the inlet hole (36) is formed correspondingly to the communicating hole (14) of the inlet pipe (11);
and a multi-stacked blade part (40) mounted between the upper plate (31) and the lower plate (35), said multi-stacked blade part (40) having a plurality of gaps (G1, G2) repeatedly formed therein, and said multi-stacked blade part (40) being cylindrical so that the fluid enters the center thereof via said inlet hole (36),
wherein the blade-driven micro pulverization unit (1) is configured so that in use the fluid is introduced from the inlet pipe (11) into the interior of the blade rotating body (30) upwards in a direction of said rotating center axis (S) through said communicating hole (14), passes through a rotating area (A) of the multi-stacked blade part (40) by means of the rotation of the blade rotating body (30), passes through the plurality of gaps (G1, G2) so as to be discharged in the radial direction to the outside of the blade rotating body (30) and to said outlet pipe (17) via said outlet hole (16), in such a way that the fluid is subjected to mechanical rotating shocks by high-speed rotation, thereby pulverizing and killing the microorganisms contained in the fluid; and
wherein the multi-stacked blade part (40) comprises:
a plurality of first multi-stacked blade parts (50) mounted along the peripheries of the inner surfaces of the upper plate (31) and the lower plate (35) to stackedly form the plurality of gaps (G1); and
a plurality of second multi-stacked blade parts (60) each having the front end coupled to the corresponding first multi-stacked blade part (50) and the rear end extending radially and thus adjacent to the rotating center axis (S) to stackedly form the plurality of gaps (G2).

2. The blade-driven micro pulverization unit (1) according to claim 1, wherein each second multi-stacked blade part (60) has the shape of an arch slant in a rotating direction of the blade rotating body (30), and the rear ends of the second multi-stacked blade parts (60) are located on an imaginary circle (C) around the rotating center axis (S).

3. The blade-driven micro pulverization unit (1) according to claim 2, wherein the diameter of the imaginary circle (C) is smaller than the diameter of the inlet hole (36) of the lower plate (35).

4. The blade-driven micro pulverization unit (1) according to any one of claims 1 to 3, wherein the front ends of the second multi-stacked blade parts (60) are insertedly coupled to the gaps (G1) formed by the first multi-stacked blade parts (50), so that the gaps (G1) formed by the first multi-stacked blade parts (50) and the gaps (G2) formed by the second multi-stacked blade parts (60) are located to cross one another.

## Patentansprüche

1. Eine klingenbetriebener Mikrozerkleinerungseinheit (1), aufweisend:
einen Rohrverbindungskörper (10), welcher geeignet ist, einen vorgegebenen Strömungsweg bereitzustellen, entlang welchem ein Fluid eingeleitet und ausgeleitet wird, wobei der Rohrverbindungskörper (10) ein Einlassrohr (11) mit einem Verbindungsloch (14) und ein Auslassrohr (17) aufweist, welche dazu geeignet sind, an eine Meerwasserzufuhrleitung (110) angeschlossen zu werden,
einen Zerkleinerer (15) mit einer zylindrischen Struktur, deren Inneres leer ist und in welcher ein Klingenrotationskörper (30) eingesetzt ist, wobei der Zerkleinerer (15) ein Auslassloch (16) aufweist, welches an einer seiner Seitenwände ausgebildet ist, so dass der Innenbereich des Zerkleinerers (15) mit dem Innenbereich des Auslassrohrs (17) in Verbindung steht, und
einen Antrieb (80) zum Drehen des Klingenrotationskörpers (30), wobei sich der Klingenrotationskörper (30) mit einer hohen Geschwindigkeit von 850 bis 1200 1/min um eine vertikale Rotationszentrumsachse (S) dreht,
wobei der Klingenrotationskörper (30) aufweist:
eine obere Platte (31), welche an einer Antriebswelle (82) des Antriebs (80) befestigt ist,
eine untere Platte (35), welche von der oberen Platte (31) in der Richtung der Rotationszentrumsachse (S) gegenüberliegend im Abstand angeordnet ist und ein Einlassloch (36) aufweist, welches an ihrem zentralen Abschnitt ausgebildet ist, um das Fluid darin einzuführen, wobei das Einlassloch (36) korrespondierend mit dem Verbindungsloch (14) des Einlassrohrs (11) ausgebildet ist,
und einen mehrfach gestapeltes Klingenteil (40), welcher zwischen der oberen Platte (31) und der unteren Platte (35) angebracht ist, wobei der mehrfach gestapelte Klingenteil (40) eine Mehrzahl von Lücken (G1, G2) aufweist, welche wiederholt darin ausgebildet sind, und wobei der mehrfach gestapelte Klingenteil (40) zylindrisch ist, so dass das Fluid über das Einlassloch (36) in dessen Mitte eintritt,
wobei die klingenbetriebene Mikrozerkleinerungseinheit (1) so eingerichtet ist, dass im Betrieb das Fluid von dem Einlassrohr (11) in das Innere des Klingenrotationskörper (30) nach oben in einer Richtung der Rotationszentrumsachse (S) durch das Verbindungsloch (14) eingeleitet wird, durch einen Rotationsbereich (A) des mehrfach gestapelten Klingenteils (40) mittels der Drehung des Klingenrotationskörper (30) hindurchströmt, durch die Mehrzahl von Lücken (G1, G2) hindurchströmt, um in der Radialrichtung zur Außenseite des Klingenrotationskörper (30) und zu dem Auslassrohr (17) mittels des Auslasslochs (16) in solch einer Weise ausgeleitet zu werden, dass das Fluid durch Hochgeschwindigkeitsrotation mechanischen Drehstößen ausgesetzt wird, wodurch die in dem Fluid enthaltenen Mikroorganismen pulverisiert und abgetötet werden, und
wobei der mehrfach gestapelte Klingenteil (40) aufweist:
eine Mehrzahl von ersten mehrfach gestapelten Klingenteilen (50), welche entlang der Umfänge der Innenflächen der oberen Platte (31) und der unteren Platte (35) angebracht sind, um die Mehrzahl von Spalten (G1) auf gestapelte Weise zu bilden, und
eine Mehrzahl von zweiten mehrfach gestapelten Klingenteilen (60), deren vorderes Ende jeweils mit dem zugehörigen ersten mehrfach gestapelten Klingenteilen (50) verbunden ist und deren hinteres Ende sich jeweils radial und damit benachbart zu der Rotationszentrumsachse (S) erstreckt, um auf gestapelte Weise die Mehrzahl von Lücken (G2) zu bilden.

2. Die klingenbetriebene Mikrozerkleinerungseinheit (1) nach Anspruch 1, wobei jeder zweite mehrfach gestapelte Klingenteil (60) die Form eines Bogens, welcher in einer Rotationsrichtung des Klingenrotationskörpers (30) geneigt ist, aufweist und wobei die hinteren Enden der zweiten mehrfach gestapelten Klingenteile (60) auf einem imaginären Kreis (C) um die Rotationszentrumsachse (S) positioniert sind.

3. Die klingenbetriebene Mikrozerkleinerungseinheit (1) nach Anspruch 2, wobei der Durchmesser des imaginären Kreises (C) kleiner ist als der Durchmesser des Einlasslochs (36) der unteren Platte (35).

4. Die klingenbetriebene Mikrozerkleinerungseinheit (1) nach einem der Ansprüche 1 bis 3, wobei die vorderen Enden der zweiten mehrfach gestapelten Klingenteile (60) mit den durch die ersten mehrfach gestapelten Klingenteile (50) gebildeten Lücken (G1) durch Einsetzen verbunden sind, so dass die durch die ersten mehrfach gestapelten Klingenteile (50) gebildeten Lücken (G1) und die durch die zweiten mehrfach gestapelten Klingenteile (60) gebildeten Lücken (G2) so angeordnet sind, dass sie einander kreuzen.

## Revendications

1. Unité de micropulvérisation entraînée par lames (1), comprenant :
un corps de raccordement de tuyaux (10) adapté à fournir un chemin d'écoulement donné le long duquel un fluide est introduit et évacué, le corps de raccordement de tuyaux (10) comprenant un tuyau d'entrée (11) doté d'un orifice de communication (14) et un tuyau de sortie (17) susceptibles d'être raccordés à un tuyau d'alimentation en eau de mer (110) ;
un pulvérisateur (15) doté d'une structure cylindrique dont l'intérieur est vide et dans laquelle est disposé, par insertion, un corps rotatif à lames (30), le pulvérisateur (15) étant doté d'un orifice de sortie (16) ménagé sur une paroi latérale de celui-ci de sorte que la zone interne du pulvérisateur (15) communique avec la zone interne du tuyau de sortie (17) ; et
un organe d'entraînement (80) pour faire tourner le corps rotatif à lames (30), le corps rotatif à lames (30) tournant à grande vitesse, de 850 à 1200 tr/min, autour d'un axe central de rotation vertical (S),
le corps rotatif à lames (30) comprenant :
une plaque supérieure (31) ajustée sur un arbre d'entraînement (82) de l'organe d'entraînement (80) ;
une plaque inférieure (35) espacée en vis-à-vis de la plaque supérieure (31) dans la direction dudit axe central de rotation (S) et dotée d'un orifice d'entrée (36) ménagé sur sa partie centrale pour y introduire le fluide, l'orifice d'entrée (36) étant ménagé en correspondance avec le l'orifice de communication (14) du tuyau d'entrée (11) ;
et une partie à lames à empilements multiples (40) montée entre la plaque supérieure (31) et la plaque inférieure (35), ladite partie à lames à empilements multiples (40) étant dotée d'une pluralité d'interstices (G1, G2), qui y sont ménagés de manière répétée, et ladite partie à lames à empilements multiples (40) étant cylindrique de sorte que le fluide pénètre au centre de celle-ci par ledit orifice d'entrée (36),
l'unité de micropulvérisation entraînée par lames (1) étant configurée de sorte que, lors de son utilisation, le fluide est introduit depuis le tuyau d'entrée (11) jusqu'à l'intérieur du corps rotatif à lames (30) vers le haut, dans une direction dudit axe central de rotation (S), par ledit orifice de communication (14), passe à travers une zone rotative (A) de la partie à lames à empilements multiples (40) grâce à la rotation du corps rotatif à lames (30), passe à travers la pluralité d'interstices (G1, G2) pour être évacué dans la direction radiale vers l'extérieur du corps rotatif à lames (30) et jusqu'audit tuyau de sortie (17) par ledit orifice de sortie (16), de manière à ce que le fluide soit soumis à des chocs mécaniques rotatifs par rotation à grande vitesse, pulvérisant et tuant ainsi les micro-organismes contenus dans le fluide ; et
la partie à lames à empilements multiples (40) comprenant :
une pluralité de premières parties à lames à empilements multiples (50) montées le long des périphéries des surfaces internes de la plaque supérieure (31) et de la plaque inférieure (35) afin de ménager par empilement la pluralité d'interstices (G1) ; et
une pluralité de deuxièmes parties à lames à empilements multiples (60), dont l'extrémité avant de chacune est couplée à la première partie à lames à empilements multiples (50) correspondante et dont l'extrémité arrière de chacune s'étend radialement et donc adjacente à l'axe central de rotation (S) afin de ménager par empilement la pluralité d'interstices (G2).

2. Unité de micropulvérisation entraînée par lames (1) selon la revendication 1, dans laquelle chaque deuxième partie à lames à empilements multiples (60) a la forme d'une arche inclinée dans une direction de rotation du corps rotatif à lames (30), et les extrémités arrière des deuxièmes parties à lames à empilements multiples (60) sont situées sur un cercle imaginaire (C) autour de l'axe central de rotation (S).

3. Unité de micropulvérisation entraînée par lames (1) selon la revendication 2, dans laquelle le diamètre du cercle imaginaire (C) est inférieur au diamètre de l'orifice d'entrée (36) de la plaque inférieure (35).

4. Unité de micropulvérisation entraînée par lames (1) selon l'une quelconque des revendications 1 à 3, dans laquelle les extrémités avant des deuxièmes parties à lames à empilements multiples (60) sont couplées par insertion aux interstices (G1) ménagés par les premières parties à lames à empilements multiples (50), de sorte que les interstices (G1) ménagés par les premières parties à lames à empilements multiples (50) et les interstices (G2) ménagés par les deuxièmes parties à lames à empilements multiples (60) se croisent.
